(19) **Europäisches Patentamt European Patent Office Office européen des brevets**

(11) **EP 4 598 103 A1**

(12) **EUROPEAN PATENT APPLICATION**
published in accordance with Art. 153(4) EPC

(43) Date of publication:
06.08.2025 Bulletin 2025/32

(21) Application number: 23872924.8

(22) Date of filing: 20.09.2023

(51) International Patent Classification (IPC):
$H04W\ 24/08^{(2009.01)}$ $H04W\ 64/00^{(2009.01)}$
$H04L\ 5/00^{(2006.01)}$ $H04W\ 24/10^{(2009.01)}$
$H04W\ 72/04^{(2023.01)}$ $H04W\ 4/029^{(2018.01)}$

(52) Cooperative Patent Classification (CPC):
H04L 5/00; H04W 4/029; H04W 24/08;
H04W 24/10; H04W 64/00; H04W 72/04

(86) International application number:
PCT/KR2023/014225

(87) International publication number:
WO 2024/071806 (04.04.2024 Gazette 2024/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.09.2022 US 202263411623 P

(71) Applicant: LG Electronics Inc.
Yeongdeungpo-gu
Seoul 07336 (KR)

(72) Inventors:
• HWANG, Seunggye
Seoul 06772 (KR)
• KO, Hyunsoo
Seoul 06772 (KR)
• SHIM, Jaenam
Seoul 06772 (KR)
• KIM, Kijun
Seoul 06772 (KR)
• KO, Woosuk
Seoul 06772 (KR)

(74) Representative: Mooser, Sebastian Thomas
Wuesthoff & Wuesthoff
Patentanwälte und Rechtsanwalt PartG mbB
Schweigerstraße 2
81541 München (DE)

(54) **METHOD AND DEVICE FOR TRANSMITTING AND RECEIVING WIRELESS SIGNAL IN WIRELESS COMMUNICATION SYSTEM**

(57) A method for a first apparatus to measure a signal in a wireless communication system according to at least one of the examples disclosed herein may involve: receiving, through network signaling, first configuration information about reference signal resource sets and second configuration information about the measurement of a reference signal; measuring the reference signal on the basis of the first configuration information and the second configuration information; and transmitting a measurement report on the basis of the measurement of the reference signal, wherein the measurement of the reference signal includes positioning-related phase measurement, and the second configuration information includes information about at least one resource set, in which the positioning-related phase will be measured, among the reference signal resource sets, and information about at least one time period in which the positioning-related phase will be measured.

FIG. 12

**Description**

**TECHNICAL FIELD**

The present disclosure relates to a wireless communication system, and more particularly, to a method and apparatus for transmitting and receiving a wireless signal.

**BACKGROUND**

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

**DISCLOSURE**

**TECHNICAL PROBLEM**

An object of the present disclosure is to provide a method of efficiently performing wireless signal transmission/reception procedures and an apparatus therefor.

It will be appreciated by persons skilled in the art that the objects that could be achieved with the present disclosure are not limited to what has been particularly described hereinabove and the above and other objects that the present disclosure could achieve will be more clearly understood from the following detailed description.

**TECHNICAL SOLUTION**

In an aspect of the present disclosure, provided herein is a method of measuring a signal by a first device in a wireless communication system. The method includes: receiving first configuration information regarding resource sets for a reference signal and second configuration information regarding measurement of the reference signal via network signaling; performing the measurement of the reference signal based on the first configuration information and the second configuration information; and transmitting a measurement report based on the measurement of the reference signal. The measurement of the reference signal may include positioning-related phase measurement. The second configuration information may include: information regarding at least one resource set in which the positioning-related phase measurement is to be performed among the resource sets for the reference signal; and information regarding at least one time duration during which the positioning-related phase measurement is to be performed.

The information regarding the at least one time duration included in the second configuration information may include at least one of a period of the at least one time duration and a time-domain pattern of the at least one time duration.

The second configuration information regarding the measurement of the reference signal may be received from a location management function (LMF) node based on a positioning protocol.

The positioning-related phase measurement may be performed on a reference signal provided in the at least one resource set during the at least one time duration.

The first device may perform the positioning-related phase measurement during a first time duration selected from among the at least one time duration configured by the second configuration information. The selection of the first time duration may be performed based on network signaling.

The reference signal may be a downlink positioning reference signal (PRS). The first device may be a positioning target user equipment (UE) or a positioning reference unit (PRU) device.

The reference signal may be a sounding reference signal (SRS) transmitted by a positioning target UE. The first device may be a transmission and reception point (TRP) or a PRU device.

The at least one time duration may be configured to be common to both a positioning target UE and a PRU.

In another aspect of the present disclosure, provided herein is a processor-readable recording medium having recorded thereon a program for executing the above-described signal measurement method.

In another aspect of the present disclosure, provided herein is a first device configured to perform the above-described signal measurement method.

The first device may further include a transceiver. The first device may be a UE operating in a wireless communication system.

The first device may be a processing device configured to control a UE operating in a wireless communication system.

In another aspect of the present disclosure, provided herein is a method of receiving, by a second device, a measurement report from a first device in a wireless communication system. The method includes: transmitting first configuration information regarding resource sets for a reference signal and second configuration information regarding measurement of the reference signal to the first device via network signaling; and receiving a measurement report on the reference signal from the first device based on the first configuration information and the second configuration information. The measurement report may include results of positioning-related phase measurement. The second configuration information includes: information regarding at least one resource set in which the positioning-related phase measurement is to be performed among the resource sets for the reference signal; and information regarding at least one time duration during which the positioning-related phase measurement is to be performed.

In a further aspect of the present disclosure, provided herein is a second device configured to perform the reception of the measurement report described above.

## ADVANTAGEOUS EFFECTS

According to an embodiment of the present disclosure, wireless signal transmission/reception procedures can be performed accurately and efficiently.

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

## BRIEF DESCRIPTION OF THE DRAWINGS

FIG. 1 illustrates physical channels used in a 3rd generation partnership project (3GPP) system as an exemplary wireless communication system, and a general signal transmission method using the same.

FIG. 2 illustrates a radio frame structure.

FIG. 3 illustrates a resource grid of a slot.

FIG. 4 illustrates exemplary mapping of physical channels in a slot

FIG. 5 illustrates an exemplary physical downlink shared channel (PDSCH) reception and acknowledgement/negative acknowledgement (ACK/NACK) transmission process.

FIG. 6 illustrates an exemplary physical uplink shared channel (PUSCH) transmission process.

FIG. 7 illustrates an example of setting a positioning protocol.

FIG. 8 illustrates an example of OTDOA.

FIG. 9 illustrates an example of Multi RTT.

FIG. 10 illustrates a procedure of operations of a network node (e.g., a higher node of a user equipment (UE), a location management function (LMF), and so on) according to an embodiment.

FIG. 11 illustrates a procedure of UE operations for performing positioning measurement.

FIG. 12 is a diagram for explaining operations of a UE and a network according to an embodiment.

FIG. 13 illustrates the operation of a first device according to one embodiment.

FIG. 14 illustrates the operation of a second device according to one embodiment.

FIGS. 15 to 18 illustrate an example of a communication system 1 and wireless devices applicable to the present disclosure.

## DETAILED DESCRIPTION

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In an embodiment of the present disclosure, for simplicity, this technology will be referred to as NR (New Radio or New RAT).

For the sake of clarity, 3GPP NR is mainly described, but the technical idea of the present disclosure is not limited thereto.

For the background art relevant to the present disclosure, the definitions of terms, and abbreviations, the following documents may be incorporated by reference.

- 38.211: Physical channels and modulation
- 38.212: Multiplexing and channel coding
- 38.213: Physical layer procedures for control
- 38.214: Physical layer procedures for data
- 38.215: Physical layer measurements
- 38.300: NR and NG-RAN Overall Description
- 38.304: User Equipment (UE) procedures in idle mode and in RRC Inactive state
- 38.321Medium Access Control (MAC) protocol specification
- 38.331: Radio Resource Control (RRC) protocol specification
- 37.213: Introduction of channel access procedures to unlicensed spectrum for NR-based access
- 36.355: LTE Positioning Protocol
- 37.355: LTE Positioning Protocol

<u>Terms and Abbreviations</u>

- 5GC: 5G Core Network
- 5GS: 5G System
- AoA: Angle of Arrival
- AP: Access Point
- CID: Cell ID
- E-CID: Enhanced Cell ID
- GNSS: Global Navigation Satellite System
- GPS: Global Positioning System
- LCS: LoCation Service
- LMF: Location Management Function
- LPP: LTE Positioning Protocol
- MO-LR: Mobile Originated Location Request

- MT-LR: Mobile Terminated Location Request
- NRPPa: NR Positioning Protocol A
- OTDOA: Observed Time Difference Of Arrival
- PDU: Protocol Data Unit
- PRS: Positioning Reference Signal
- RRM: Radio Resource Management
- RSSI: Received Signal Strength Indicator
- RSTD: Reference Signal Time Difference
- ToA: Time of Arrival
- TP: Transmission Point
- TRP: Transmission and Reception Point
- UE: User Equipment
- SS: Search Space
- CSS: Common Search Space
- USS: UE-specific Search Space
- PDCCH: Physical Downlink Control Channel
- PDSCH: Physical Downlink Shared Channel;
- PUCCH: Physical Uplink Control Channel;
- PUSCH: Physical Uplink Shared Channel;
- DCI: Downlink Control Information
- UCI: Uplink Control Information
- SI: System Information
- SIB: System Information Block
- MIB: Master Information Block
- RRC: Radio Resource Control
- DRX: Discontinuous Reception
- RNTI: Radio Network Temporary Identifier
- CSI: Channel state information
- PCell: Primary Cell
- SCell: Secondary Cell
- PSCell: Primary SCG(Secondary Cell Group) Cell
- CA: Carrier Aggregation
- WUS: Wake up Signal
- TX: Transmitter
- RX: Receiver
- RSTD: Reference Signal Time Difference
- RS: Reference Signal
- PRS: Positioning Reference Signal
- SRS: Sounding Reference Signal

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

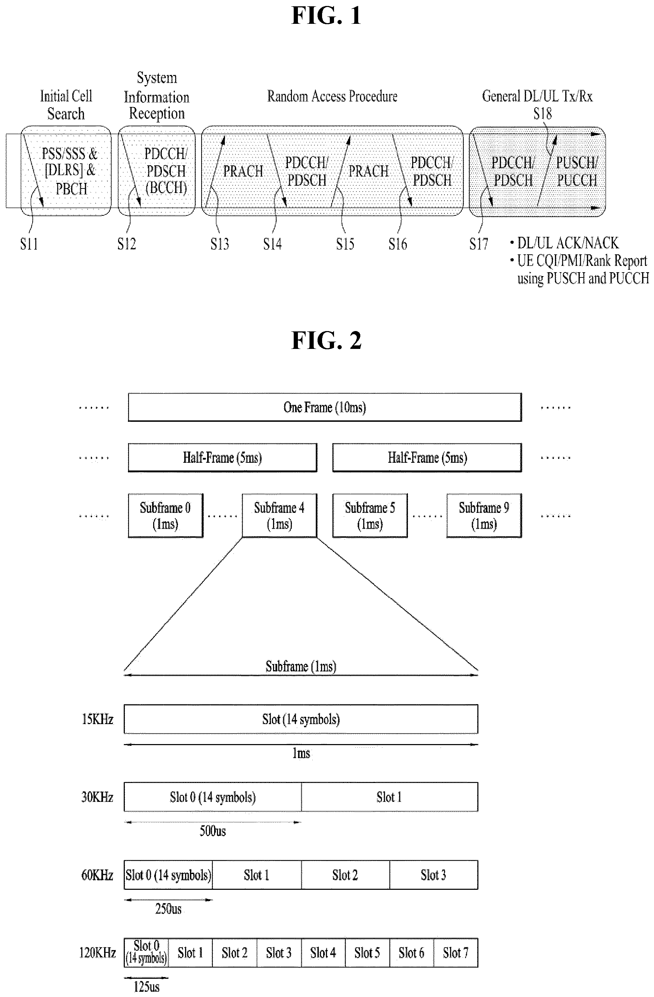

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| * $N^{slot}_{symb}$: Number of symbols in a slot <br> * $N^{frame,u}_{slot}$: Number of slots in a frame <br> * $N^{subframe,u}_{slot}$: Number of slots in a subframe | | | |

Table 2 illustrates that the number of symbols per slot, the number of slots per frame, and the number of slots per subframe vary according to the SCS when the extended CP is used.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

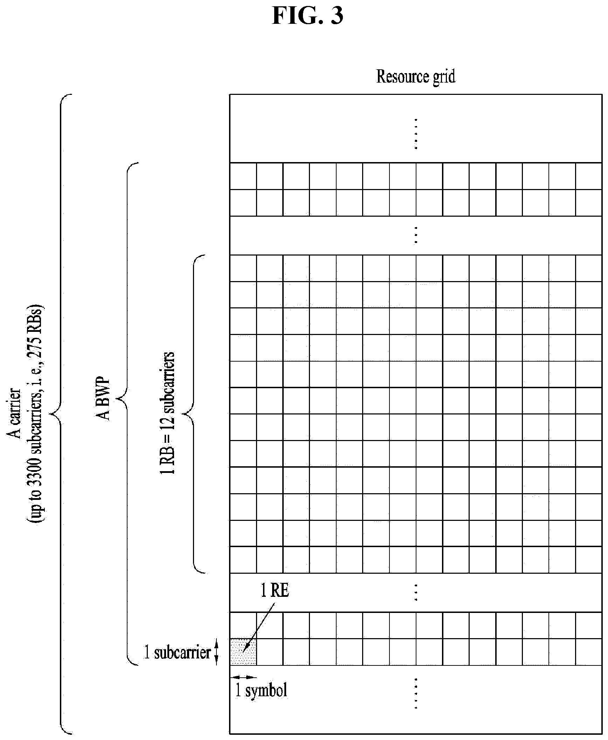

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

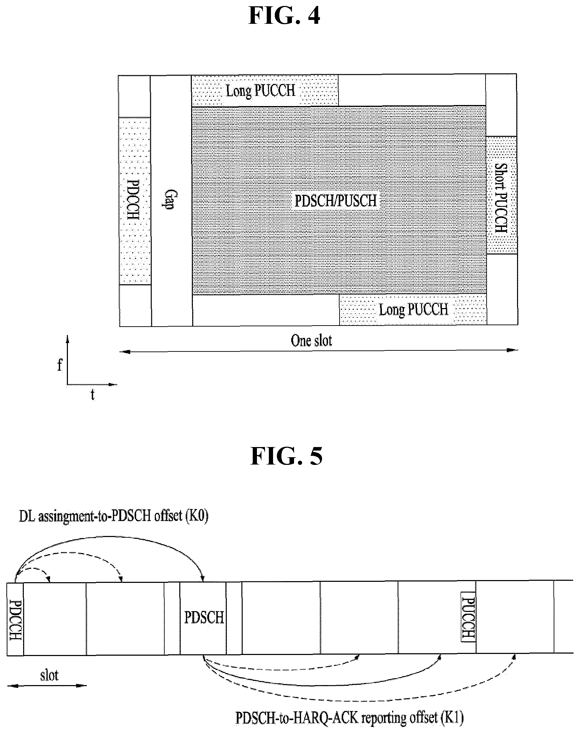

FIG. 4 illustrates an example of mapping physical channels in a slot. In an NR system, a frame is characterized by a self-contained structure in which all of a DL control channel, DL or UL data, and a UL channel may be included in one slot. For example, the first N symbols of a slot may be used to carry a DL channel (e.g., PDCCH) (hereinafter, referred to as a DL control region), and the last M symbols of the slot may be used to carry a UL channel (e.g., PUCCH) (hereinafter, referred to as a UL control region). Each of N and M is an integer equal to or larger than 0. A resource area (hereinafter, referred to as a data region) between the DL control region and the UL control region may be used to transmit DL data (e.g., PDSCH) or UL data (e.g., PUSCH). A guard period (GP) provides a time gap for switching from a transmission mode to a reception mode or from the reception mode to the transmission mode. Some symbols at a DL-to-UL switching time in a subframe may be configured as a GP.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g. a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

FIG. 5 illustrates an exemplary PDSCH reception and ACK/NACK transmission process. Referring to FIG. 5, the UE may detect a PDCCH in slot #n. The PDCCH includes DL scheduling information (e.g., DCI format 1_0 or DCI format 1_1), and indicates a DL assignment-to-PDSCH offset, K0 and a PDSCH-HARQ-ACK reporting offset, K1. After receiving a PDSCH in slot #(n+K0) according to the scheduling information of slot #n, the UE may transmit UCI on a PUCCH in slot #(n+K1). The UCI may include a HARQ-ACK response to the PDSCH. In the case where the PDSCH is configured to carry one TB at maximum, the HARQ-ACK response may be configured in one bit. In the case where the PDSCH is configured to carry up to two TBs, the HARQ-ACK response may be configured in 2 bits if spatial bundling is not configured and in 1 bit if spatial bundling is configured. When slot #(n+K1) is designated as a HARQ-ACK transmission timing for a plurality of PDSCHs, UCI transmitted in slot #(n+K1) includes HARQ-ACK responses to the plurality of PDSCHs.

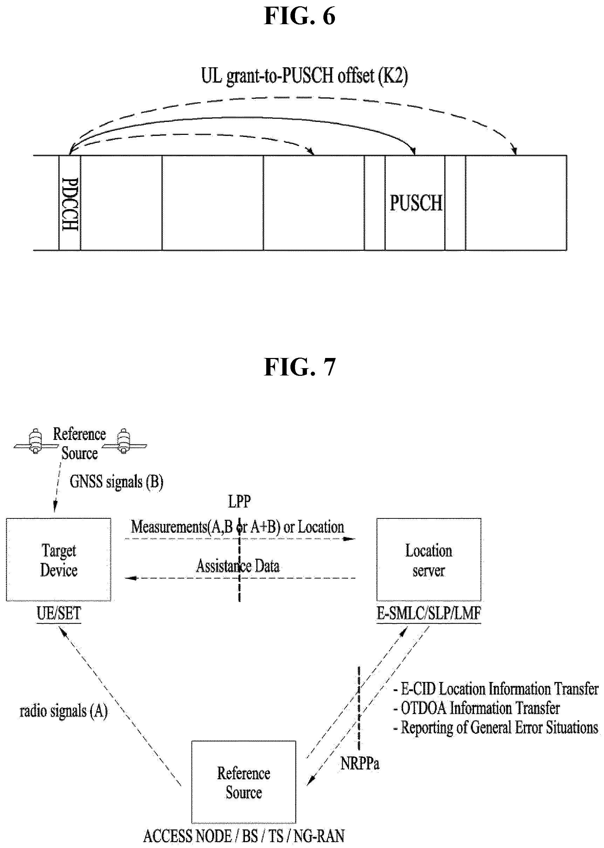

FIG. 6 illustrates an exemplary PUSCH transmission procedure. Referring to FIG. 6, the UE may detect a PDCCH in slot #n. The PDCCH includes DL scheduling information (e.g., DCI format 1_0 or 1_1). The UE may then transmit a PUSCH in slot #(n+K2) according to the scheduling information in slot #n. The PUSCH includes a UL-SCH TB.

## Positioning

Positioning may refer to determining the geographical position and/or velocity of the UE based on measurement of radio signals. Location information may be requested by and reported to a client (e.g., an application) associated with to the UE. The location information may also be requested by a client within or connected to a core network. The location information may be reported in standard formats such as formats for cell-based or geographical coordinates, together with estimated errors of the position and velocity of the UE and/or a positioning method used for positioning.

FIG. 7 is a diagram illustrating an exemplary positioning protocol configuration for positioning a UE, to which various embodiments are applicable.

Referring to FIG. 7, an LTE positioning protocol (LPP) may be used as a point-to-point protocol between a location server (E-SMLC and/or SLP and/or LMF) and a target device (UE and/or SET), for positioning the target device using position-related measurements obtained from one or more reference resources. The target device and the location server may exchange measurements and/or location information based on signal A and/or signal B over the LPP.

NRPPa may be used for information exchange between a reference source (access node and/or BS and/or TP and/or NG-RAN node) and the location server.

The NRPPa protocol may provide the following functions.

- E-CID Location Information Transfer. This function allows the reference source to exchange location information with the LMF for the purpose of E-CID positioning.
- OTDOA Information Transfer. This function allows the reference source to exchange information with the LMF for the purpose of OTDOA positioning.
- Reporting of General Error Situations. This function allows reporting of general error situations, for which function-specific error messages have not been defined.

Positioning methods supported in the NG-RAN may include a GNSS, an OTDOA, an E-CID, barometric sensor positioning, WLAN positioning, Bluetooth positioning, a TBS, uplink time difference of arrival (UTDOA) etc. Although any one of the positioning methods may be used for UE positioning, two or more positioning methods may be used for UE positioning.

OTDOA (Observed Time Difference of Arrival)

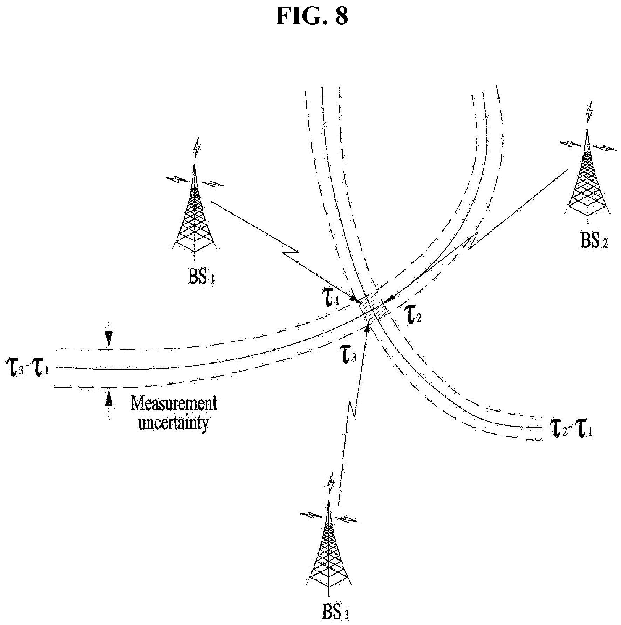

FIG. 8 is a diagram illustrating an observed time difference of arrival (OTDOA) positioning method, to which various embodiments are applicable;

The OTDOA positioning method uses time measured for DL signals received from multiple TPs including an eNB, an ng-eNB, and a PRS-only TP by the UE. The UE measures time of received DL signals using location assistance data received from a location server. The position of the UE may be determined based on such a measurement result and geographical coordinates of neighboring TPs.

The UE connected to the gNB may request measurement gaps to perform OTDOA measurement from a TP. If the UE is not aware of an SFN of at least one TP in OTDOA assistance data, the UE may use autonomous gaps to obtain an SFN of an OTDOA reference cell prior to requesting measurement gaps for performing reference signal time difference (RSTD) measurement.

Here, the RSTD may be defined as the smallest relative time difference between two subframe boundaries received from a reference cell and a measurement cell. That is, the RSTD may be calculated as the relative time difference between the start time of a subframe received from the measurement cell and the start time of a subframe from the reference cell that is closest to the subframe received from the measurement cell. The reference cell may be selected by the UE.

For accurate OTDOA measurement, it is necessary to measure time of arrival (ToA) of signals received from geographically distributed three or more TPs or BSs. For example, ToA for each of TP 1, TP 2, and TP 3 may be measured, and RSTD for TP 1 and TP 2, RSTD for TP 2 and TP 3, and RSTD for TP 3 and TP 1 are calculated based on three ToA values. A geometric hyperbola is determined based on the calculated RSTD values and a point at which curves of the hyperbola cross may be estimated as the position of the UE. In this case, accuracy and/or uncertainty for each ToA measurement may occur and the estimated position of the UE may be known as a specific range according to measurement uncertainty.

For example, RSTD for two TPs may be calculated based on Equation 1 below.

[Equation 1]

$$RSTDi_{,1} = \frac{\sqrt{(x_t - x_i)^2 + (y_t - y_i)^2}}{c} - \frac{\sqrt{(x_t - x_1)^2 + (y_t - y_1)^2}}{c} + (T_i - T_1) + (n_i - n_1)$$

In Equation 1, c is the speed of light, $\{x_t, y_t\}$ are (unknown) coordinates of a target UE, $\{x_i, y_i\}$ are (known) coordinates of a TP, and $\{x_1, y_1\}$ are coordinates of a reference TP (or another TP). Here, $(T_i - T_1)$ is a transmission time offset between two TPs, referred to as "real time differences" (RTDs), and $n_i$ and $n_1$ are UE ToA measurement error values.

E-CID (Enhanced Cell ID)

In a cell ID (CID) positioning method, the position of the UE may be measured based on geographical information of a serving ng-eNB, a serving gNB, and/or a serving cell of the UE. For example, the geographical information of the serving ng-eNB, the serving gNB, and/or the serving cell may be acquired by paging, registration, etc.

The E-CID positioning method may use additional UE measurement and/or NG-RAN radio resources in order to improve UE location estimation in addition to the CID positioning method. Although the E-CID positioning method partially may utilize the same measurement methods as a measurement control system on an RRC protocol, additional measurement only for UE location measurement is not generally performed. In other words, an additional measurement configuration or measurement control message may not be provided for UE location measurement. The UE does not expect that an additional measurement operation only for location measurement will be requested and the UE may report a measurement value obtained by generally measurable methods.

For example, the serving gNB may implement the E-CID positioning method using an E-UTRA measurement value provided by the UE.

Measurement elements usable for E-CID positioning may be, for example, as follows.

UE measurement: E-UTRA reference signal received power (RSRP), E-UTRA reference signal received quality (RSRQ), UE E-UTRA reception (Rx)-transmission (Tx) time difference, GERAN/WLAN reference signal strength indication (RSSI), UTRAN common pilot channel (CPICH) received signal code power (RSCP), and/or UTRAN CPICH Ec/Io

E-UTRAN measurement: ng-eNB Rx-Tx time difference, timing advance ($T_{ADV}$), and/or AoA

Here, $T_{ADV}$ may be divided into Type 1 and Type 2 as follows.

$$T_{ADV} \text{ Type } 1 = (\text{ng-eNB Rx-Tx time difference}) + (\text{UE E-UTRA Rx-Tx time difference})$$

$$T_{ADV} \text{ Type } 2 = \text{ng-eNB Rx-Tx time difference}$$

AoA may be used to measure the direction of the UE. AoA is defined as the estimated angle of the UE counterclockwise from the eNB/TP. In this case, a geographical reference direction may be north. The eNB/TP may use a UL signal such as an SRS and/or a DMRS for AoA measurement. The accuracy of measurement of AoA increases as the arrangement of an antenna array increases. When antenna arrays are arranged at the same interval, signals received at adjacent antenna elements may have constant phase rotate.

UTDOA (Uplink Time Difference of Arrival)

UTDOA is a method of determining the location of a UE by estimating the arrival time of the SRS. When calculating the estimated SRS arrival time, the location of the UE can be estimated through an arrival time difference with another cell (or base station/TP) by using the serving cell as a reference cell. To implement UTDOA, the E-SMLC may indicate a serving cell of the target UE in order to instruct the target UE to transmit SRS. In addition, E-SMLC can provide configuration such as periodic/aperiodic SRS, bandwidth and frequency/group/sequence hopping.

Multi RTT (round trip time)

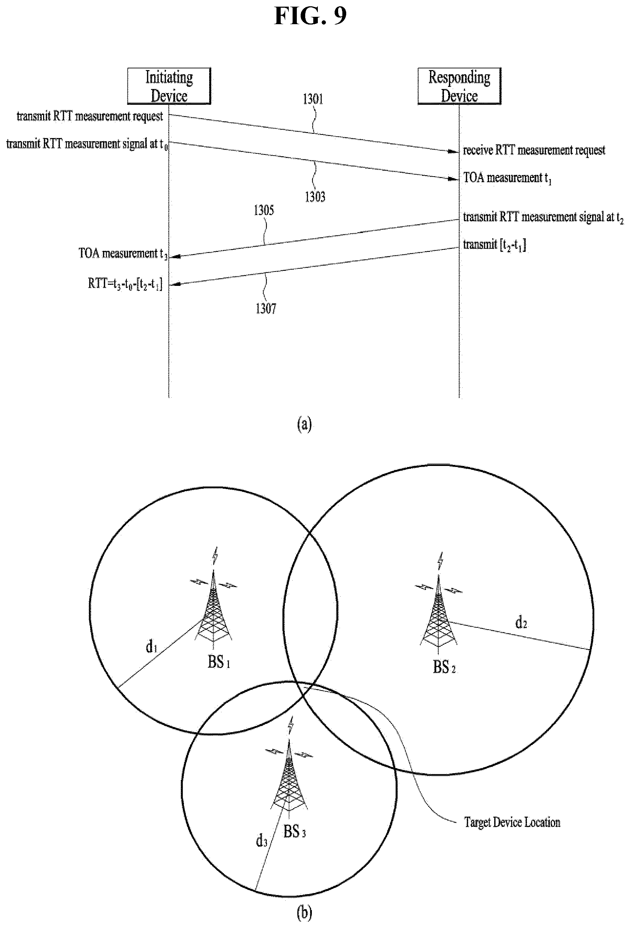

FIG. 9 is a diagram illustrating an exemplary multi-round trip time (multi-RTT) positioning method to which various embodiments are applicable.

Referring to FIG. 9(a), an exemplary RTT procedure is illustrated, in which an initiating device and a responding device perform ToA measurements, and the responding device provides ToA measurements to the initiating device, for RTT measurement (calculation). The initiating device may be a TRP and/or a UE, and the responding device may be a UE and/or a TRP.

The initiating device may transmit an RTT measurement request, and the responding device may receive the RTT measurement request (1301).

The initiating device may transmit an RTT measurement signal at $t_0$ and the responding device may acquire a ToA measurement t1(1303).

The responding device may transmit an RTT measurement signal at t2 and the initiating device may acquire a ToA measurement t3 (1305).

The responding device may transmit information about [t2-t1], and the initiating device may receive the information and calculate an RTT by Equation 2 (1307). The information may be transmitted and received based on a separate signal or in the RTT measurement signal (1305).

[Equation 2]

$$RTT = t_3 - t_0 - [t_2 - t_1]$$

Referring to FIG. 9(b), an RTT may correspond to a double-range measurement between two devices. Positioning estimation may be performed from the corresponding information, and multilateration may be used for the positioning estimation. $d_1$, $d_2$, and $d_3$ may be determined based on the measured RTT, and the location of a target device may be determined to be the intersection of the circumferences of circles with radiuses of $d_1$, $d_2$, and $d_3$, in which $BS_1$, $BS_2$, and $BS_3$ (or TRPs) are centered, respectively.

NG-RAN positioning architecture and procedures

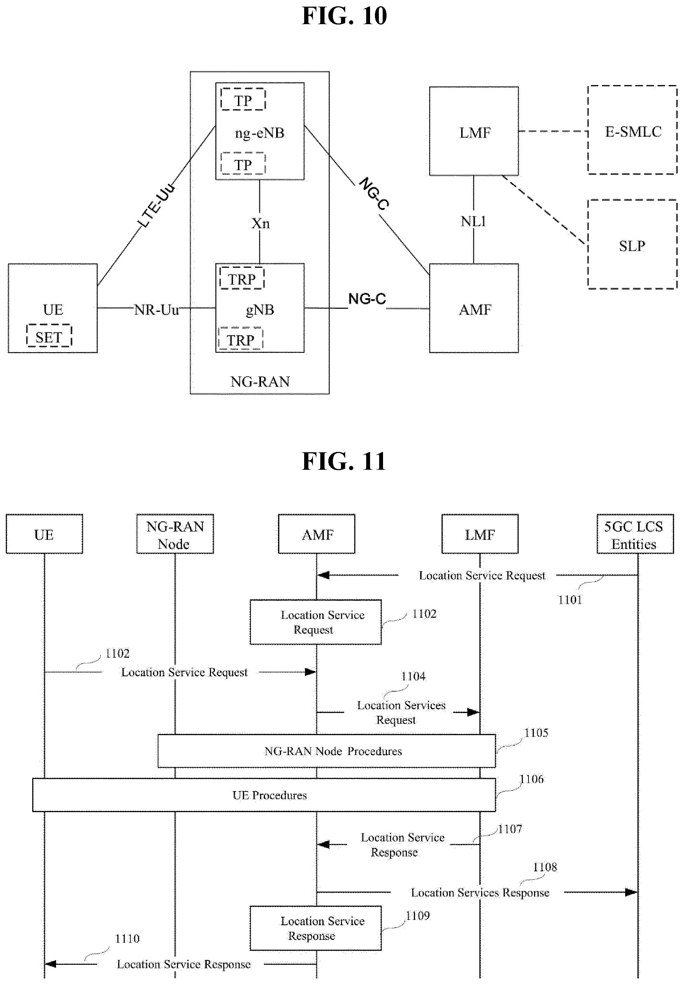

FIG. 10 illustrates a positioning structure of a next generation (NG) radio access network (RAN). The NG RAN may be referred to as a NR RAN or 5G RAN.

An AMF may receive a request for location services related to a specific target UE from other entities (e.g., gateway mobile location centre (GMLC) or UE), or the AMF itself may decide to initiate the location services on behalf of the specific target UE (e.g., in the case of IP multimedia subsystem (IMS) emergency calls). Subsequently, the AMF may forward the location service request to an LMF. The LMF may process the location service request, where processing the location service request may include transmitting assistance data to the target UE for UE-based and/or UE-assisted positioning and/or positioning of the target UE. The LMF transmits location service results (e.g., location estimates for the UE) to the AMF. In the case of location services requested by an entity other than the AMF (e.g., GMLC or UE), the AMF forwards the location service result to the corresponding entity.

An NG-RAN node may control TRPs/TPs, such as RRM or DL-PRS only TPs, to support a PRS-based terrestrial beacon system (TBS).

The LMF may be connected to an enhanced serving mobile location centre (E-SMLC) to access universal terrestrial radio access network (UTRAN) information.

The LMF may be connected to a secure user plane location (SUPL) location platform (SLP), which is responsible for positioning in the user plane.

FIG. 11 illustrates an example of location services supported by an NG-RAN.

When a UE is in a connection management idle (CM-IDLE) state, if an AMF receives a location service request, the AMF performs a network-triggered service request to configure signaling for a connection to the UE and allocation of a specific serving gNB/ng-eNB. In FIG. 11, it is assumed that the UE is in the connected mode.

A location service request for the UE may be triggered, and the request may be one of steps 1101, 1102, or 1103. For example, an entity in a 5GC such as a GMLC may request location services (e.g., positioning) for a target UE from a serving AMF (1101). Alternatively, the serving AMF may trigger location services (e.g., to find the UE for emergency calls) for the target UE itself (1102). Further, the UE may request location services (e.g., positioning or assistance data transfer) from the serving AMF at the NAS level (1103).

The AMF forwards the location service request to an LMF (1104).

The LMF provides services in the NG-RAN to acquire location measurements or assistance data and initiates a positioning procedure with a neighboring ng-eNB/gNB (1105).

(Instead of or in addition to step 1105) The LMF initiates the positioning procedure with the UE to obtain location estimates or positioning measurements or transmit location assistance data to the UE (1106).

The LMF provides a location service response to the AMF (1107) (e.g., success or failure and, if requested and obtained, location estimates for the UE).

(In step 1101) The AMF provides the location service response to the 5GC entity (1108) (e.g., location estimates for the UE).

(In step 1102) The AMF supports the services triggered in step 1102 based on the location service response received in step 1107 (1109) (e.g., providing location estimates related to emergency calls to the GMLC).

(In step 1103) The AMF provides the location service response to the UE (1110) (e.g., location estimates for the UE).

## Timing Information for Carrier Phase Measurement (CPM)

In NR, various techniques may be used to perform positioning. As mentioned above, timing-based methods (e.g., DL-TDOA (Downlink Time Difference of Arrival), UL-RTOA (Uplink Round-Trip Time of Arrival), Multi RTT), angle-based methods (e.g., AoA, AoD), and cell ID-based methods (e.g., E-CID) may be used.

In addition, Rel-18 discusses support for carrier phase measurement-based positioning methods (i.e., NR carrier phase measurement). In CPM-based positioning, to measure the propagation delay of an RS caused by the distance between the BS and UE, a method of performing and utilizing phase measurement based on the carrier frequency of a received signal is being discussed.

In CPM-based positioning, positioning is performed based on phase changes in the phase domain, which improves positioning accuracy. On the other hand, unlike other time-domain positioning techniques, positioning accuracy may be significantly affected by the phase change, and thus it is necessary to consider the impact of phase errors. The phase value at the k-th subcarrier measured at the receiver for an RS may be expressed as shown in Equation 3.

$$[\text{Equation 3}]$$

$$\Phi_k = \Phi_{tx} - \Phi_{rx} - 2\pi(f_c + k\Delta f) * \tau_0 + \eta_k$$

In Equation 3, $\Phi_k$ refers to a phase value measured at the k-th subcarrier, and $f_c$ and $\Delta f$ represent a carrier frequency and a subcarrier spacing used for transmitting an RS, respectively. In addition, $\tau_0$ represents a propagation delay, which is the time taken for the RS transmitted from the transmitter to be received at the receiver, and $\eta_k$ represents a noise value caused by additive white Gaussian noise (AWGN) and multipath effects at the receiver.

In this case, $\Phi_{tx}$ and $\Phi_{rx}$ represent initial phase error values occurring at the transmitter and receiver, respectively.

The initial phase errors are common phase error values occurring across the entire bandwidth of the received RS. The initial phase errors are caused by the physical characteristics of components and devices in the transmitter and receiver, which makes prediction and modeling difficult.

The impact of such initial phase errors affects the performance of CPM-based positioning and thus needs to be removed. To this end, a differencing technique may be used in CPM-based positioning systems. The differencing technique removes common error values by using the difference between two or more phase measurements with the same error. For this, the two or more measurements need to be measured at the same timing.

For example, in the case of initial phase errors occurring at the receiver, the initial phase errors may be removed by using the difference between two measurements measured at the same time by the same receiver. In the case of initial phase errors occurring at the transmitter, the initial phase errors may be removed by using the difference between measurements measured at two different receivers for an RS transmitted from the same transmitter.

In this case, to remove the initial phase errors at the transmitter, precise or known location information on at least one UE/device is required. To this end, the use of a positioning reference unit (PRU) is considered.

The PRU is a device/node with a known location that performs positioning measurements (e.g., RSTD, RSRP, UE Rx-Tx time difference measurements, etc.) and may report the measurements to the location server. Additionally, the PRU transmits an SRS to allow TRPs to measure the SRS from the PRU with the known location and report UL measurements (e.g., RTOA, UL-AoA, gNB Rx-Tx time difference, etc.). The measurements by the PRU may be compared with prediction of PRU measurements for a known location by the location server. The comparison may be used to obtain information for calibrating the position measurements of nearby target devices. The obtained information for position measurement calibration may be used to correct DL/UL position measurements for other target devices.

From the perspective of the location server, a UE with a known location may function as the PRU.

When the PRU is used for NR CPM positioning, as mentioned above, the UE and PRU need to measure a phase value at the same time for an RS transmitted from the same transmitter. If the UE and PRU autonomously select the RS and timing to be measured, similar to existing positioning techniques, the UE and PRU may not be able to remove the same initial phase error, which may be disadvantageous for ensuring the positioning performance of CPM. To this end, there may be a need for operations agreed between the UE and PRU.

To solve this issue and support CPM-based positioning, the present disclosure proposes a method in which the PRU provides the UE with a timing for measuring the phase of an RS and the UE uses the information.

The methods described below primarily focus on CPM-based positioning techniques in the 3GPP NR system, but the present disclosure is not limited thereto. The methods may also be applied to other positioning techniques that estimate the distance or direction between the transmitter and UE. Thus, the proposed methods may be applied to all types of transmission methods and positioning techniques expected by the BS and UE. Additionally, the proposed methods are not restricted to the use of a PRU. Phase values may be measured by measuring an RS, and thus the methods may also be applied to devices that use location information. Furthermore, the role of the PRU may be replaced by devices such as the BS or UE.

For convenience, it is assumed that the transmitter is the BS and the receiver is the UE. In this case, a structure where the BS transmits a PRS and the UE receives the PRS is considered. The proposed methods are explained based on operations where the UE measures the phase value using the received PRS and reports the calculated phase measurement results to a higher node (e.g., LMF or BS). However, the proposed methods may also be applied when the transmitter is the UE and the receiver is the BS or when both the transmitter and receiver are UEs (or BSs). Additionally, the proposed methods may be applied when the RS used for transmission/reception and phase measurement is an SRS or SL PRS.

The proposed methods may be implemented either as a combination of one or more methods or independently without any combination. Some terms, symbols, and sequences used may be replaced with different terms, symbols, or sequences, as long as the principles of the present disclosure are maintained.

To support CPM-based positioning, the present disclosure proposes a method in which a network node (e.g., higher node such as the BS/TRP or LMF) configures a CPM window and provides information thereon to other nodes (e.g., UE/PRU/TRP), and the other nodes (e.g., UE/PRU/TRP) receive a PRS within a time duration determined based on the received CPM window-related information and perform phase measurement for CPM-based positioning. For convenience, the network node is referred to as the higher node, and the other node is assumed to be the UE. However, the present disclosure is not limited thereto.

## UE Measurement Based on CPM Window

According to the PRS measurement reporting/configuration of the UE in the existing NR standard, the network may provide the UE with a list of PRS resources and priorities for PRS measurements, and the UE may report PRS measurements based on the list of PRS resources. However, in the existing NR standard, information on the timing/time resources when/where the PRS measurements should be performed is not included in configuration information provided to the UE by the network. Therefore, a problem exists in the existing NR standard in that there is no method of configuring PRS time resources/intervals (common with the RPU) for the UE.

In other words, to eliminate phase errors occurring at the transmitter and receiver, double differencing based on the phase measured by the PRU needs to be performed. For double differencing, simultaneous reception between the PRU and the target UE is required. However, the current NR specification does not provide a method for different UEs to perform simultaneous reception on the same PRS resource.

To solve this issue, the present disclosure defines a new CPM window.

The CPM window refers to a time duration and/or time resources where the UE performs measurement for CPM-based positioning. The CPM window may occur periodically or according to a specific pattern. The CPM window may be a time duration with a specific size. For example, the pattern may include information indicating time resources belonging to the CPM window among multiple time resources. However, the present disclosure is not limited thereto.

For example, the CPM window may be defined as a time duration configured for positioning purposes supported by 3GPP, such as a measurement gap (MG) and/or PRS processing window (PPW) or a duration similar thereto.

When the CPM window is configured, the UE may perform measurement for CPM-based positioning only within the CPM window and may not perform measurement outside of the duration. For example, the time duration during which the PRU performs measurement may be defined as the CPM window, and the CPM window may be configured for the UE. Based on the measurement results from the UE and PRU, the difference in phase measurement results may be obtained.

If the CPM window is not configured, the UE may be configured to acquire measurements for CPM-based positioning at the locations of the MG and/or PPW configured for other positioning methods.

### Configuration of CPM Window

The CPM window is a time duration configured for the UE to perform measurements for CPM purposes. Both the network and a node performing CPM (e.g., UE/PRU/TRP) need to have the same CPM window configuration/assumption. For example, a higher node may configure the CPM window, considering the measurement operations of the PRU, and provide information thereon to the UE.

For example, at least one of the following options may be used to configure the CPM window.

Option A-1) The CPM window may be configured through a positioning-related MG and/or PPW configuration. For example, the CPM window may be set as one of the MG or PPW that are used for positioning purposes. The UE receives configuration information on the MG/PPW. The UE may check whether the CPM window is included in the received configuration information. If the configuration for the CPM window is included, the UE may utilize the configuration. If the UE is configured with one or more MGs and/or PPWs and some of the MGs and/or PPWs are set as the CPM window, the UE may be configured to have two or more MGs and/or PPWs activated simultaneously. This may be suitable for supporting CPM-based positioning as well as other positioning methods. The method described in the above option is advantageous for simplifying the implementation of the UE because the method allows for the reuse of the existing definitions of the MG and/or PPW.

Option A-2) The CPM window may be composed as a subset of an MG and/or PPW that may be used for positioning purposes. In a specific method, if the MG and/or PPW are periodically configured to allow the UE to measure a PRS, a portion of the MG and/or PPW may be used as the CPM window. For example, the CPM window may be configured to be repeated at every N-th MG based on a specific MG at a given time. As another example, a bitmap corresponding to M consecutive MGs may be defined, and the activation positions of the CPM window, which periodically occurs, may be determined through the bitmap. The method described in the above option provides a favorable structure for supporting CPM-based positioning, even when a single MG and/or PPW is configured. The method also offers a structure that allows for fine-tuning the operation of the MG and/or PPW depending on the status of the PRU.

Option A-3) The CPM window may be set as a separate duration, which is different from the MG and/or PPW used for positioning purposes. If the UE is configured with both the MG and/or PPW and the CPM window, the UE may be configured to acquire measurements for CPM-based positioning at the locations where the MG and/or PPW overlap with the CPM window. If multiple MGs and/or PPWs are activated, the duration of the CPM window may be applied to all currently activated MGs and/or PPWs. This method may provide a structure that supports cases where the UE, which is the positioning target, and the PRU require different MG and/or PPW configurations and the position of the MG and/or PPW of the UE is capable of dynamically controlled.

### Relationship between CPM Window and PRS Resources

One of the expected benefits when applying the CPM window is the advantage of differencing, which may be performed by obtaining measurements for the same RS at the same time as the PRU. To this end, it is necessary to specify RSs to be measured along with timing information, such as the CPM window. For example, the RSs to be measured may be PRSs that the PRU obtains measurements from. To designate the RSs, a PRS resource (set) or TRP ID, which are configuration units for the NR PRS, may be used.

As a specific method of designating a PRS that the UE measures in a specific CPM window, a set of PRS resources (or a set of resource groups (e.g., TRPs) capable of being used for similar purposes) may be defined (hereinafter referred to as a CPM-PRS set). This set may be configured to correspond to each CPM window. When the UE performs measurement for CPM-based positioning based on the location of a specific CPM window, the UE may be configured to obtain measurements in a CPM-PRS set that corresponds to the specific CPM window.

In this case, one CPM window may be configured to correspond to one or more CPM-PRS sets. Additionally, if the UE is configured with two or more CPM windows, CPM-PRS sets corresponding to each CPM window may be configured to be different from each other.

The configurations of CPM-PRS sets may be defined to have a common frequency region. For example, the configuration of the CPM-PRS set may be configured on a per PFL (positioning frequency layer) basis. Alternatively, the configuration of the CPM-PRS set may be defined such that PRS resources (sets) included in the CPM-PRS set are only allowed if the PRS resources (sets) belong to the same PFL. As another example, the configuration of the CPM window may also be set on a per PFL basis. This limits the configuration of the CPM-PRS set associated with the CPM window to be on a per PFL basis, which may have the same effect as the previous example. If multiple CPM-PRS sets or CPM windows are configured, the UE (or PRU) may select one or select a set of CPM-PRS sets or CPM windows configured on the same PFL to measure and report the PRS. These methods have the advantage of aligning the location of the carrier frequency of PRS resources measured by the UE, thereby ensuring consistency in the representation of the phase domain used for positioning.

### Provision and Acquisition of Configuration Information on CPM Window

The UE may receive information related to a CPM window configured by the higher node and apply the information. For example, the information related to the CPM window may be exchanged via an SIB (e.g., positioning SIB) transmitted by the BS, or through UE-dedicated RRC signaling transmitted by the BS, or via a location protocol (LPP) transmitted by the LMF. Additionally, the information related to the CPM window may be preconfigured through the above channels, and while the higher node requests the UE to perform measurement for CPM-based positioning, the detailed operations may be instructed (or recommended).

The UE may receive configuration information on one or more CPM windows from the higher node. This is because, when multiple PRUs participate in CPM-based positioning, each PRU may have different capabilities and conditions for obtaining measurements. Therefore, this configuration may be intended to configure individual CPM windows for each PRU to accommodate the differences.

If the UE is configured with multiple CPM windows, the CPM window actually used by the UE for measurement may be one of the multiple CPM windows. In this case, the CPM window applied to the UE may be selected according to one of the following options, or two or more methods may be used in combination.

Option B-1) One or more CPM windows from multiple CPM windows may be selected by the higher node (e.g., BS or LMF), and this selection may be explicitly signaled to the UE. In this case, the UE may be configured to perform measurement for CPM-based positioning within the indicated CPM window. If more than one CPM window is indicated to the UE, the UE may use all of the indicated CPM windows or select some from among the candidates of the indicated CPM windows. This option allows the higher node to indicate a suitable CPM window for each UE, considering the estimated position of the UE and the network environment. That is, the option may optimize CPM positioning performance, thereby providing advantageous effects.

Option B-2) One or more CPM windows from multiple CPM windows may be selected by the higher node (e.g., BS or LMF) and provided to the UE in the form of assistance data. In this case, the UE may select a CPM window to use based on the received assistance data, and it may be allowed to select a CPM window other than the CPM window selected by the higher node. This option maintains the benefit of providing information about a suitable CPM window for each UE, considering the estimated position of the UE and the network environment. At the same time, the option allows the UE to select a CPM window based on the environment estimated by the UE, thereby offering flexibility from the perspective of the UE.

Option B-3) The UE may be configured to select one or more CPM windows from multiple configured CPM windows based on the determination thereof. If Option B-1 or Option B-2 is used together, it may be configured to consider the case where no information is provided by the higher node as the application of Option B-3. Additionally, if necessary, the UE may be configured to report information on the CPM window selected by the UE during the measurement reporting step. The measurement reporting step refers to a step where the UE reports information on the measurements the UE acquires for CPM-based positioning to the higher node. For example, a structure in which the UE transmits information to the LMF via the LPP may be used. This option does not generate additional signaling overhead and offers the advantage of allowing the UE to select a suitable CPM window for the UE based on the situation thereof.

**Request Related to CPM Window from UE**

The present disclosure proposes an operation in which the UE transmits information to the higher node to request the reconfiguration and re-indication of a CPM window. In the proposed method, the UE may transmit the request information in the form of assistance data. For example, regarding the information related to the CPM window, the assistance data may include preferences for timing information such as the period and duration of the CPM window, information on a preferred CPM window among multiple configured CPM windows, and so on. In this case, the higher node receives the assistance data transmitted by the UE and may consider operations such as the reconfiguration or re-indication of the CPM window based on the received information. If the higher node intends to modify the configuration/indication information on the CPM window, the higher node may provide information on the modification to the UE.

The on-demand PRS request from the UE may include information on a CPM window. This method is intended to provide information on a suitable CPM window for performing operations related to an on-demand PRS when the UE performs a procedure for the on-demand PRS for CPM purposes. In this case, the higher node may support a subsequent procedure for the on-demand PRS by reflecting the preferences of the UE regarding the CPM window based on the received on-demand PRS request.

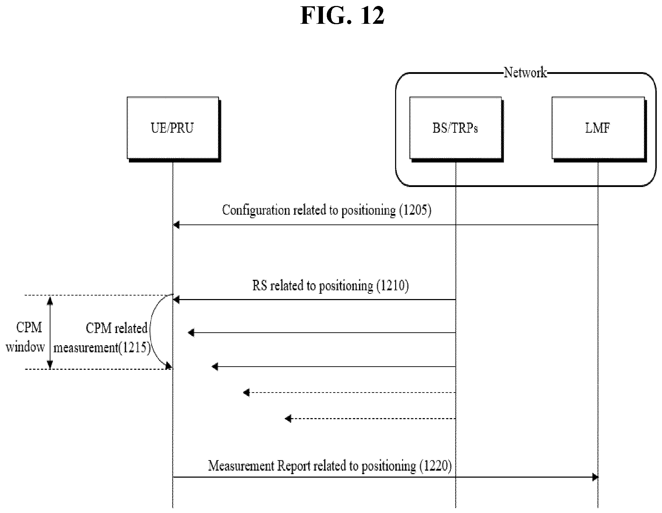

FIG. 12 is a diagram for explaining operations of a UE and a network according to an embodiment. In FIG. 12, the network may include multiple network nodes (e.g., BS/TRPs and LMF server). For the sake of convenience in the explanation, the term "LMF" used may be replaced with another term. FIG. 12 shows an implementation example of the aforementioned proposals, and the content described earlier may be referenced to help understanding of FIG 12.

Referring to FIG. 12, an LMF may transmit positioning-related configuration information to a UE/PRU through higher-layer signaling related to a positioning protocol

(1205). The positioning-related configuration information provided by the LMF may be transmitted to the UE/PRU via a BS/TRPs.

The positioning-related configuration information provided to the UE/PRU from the network may include at least one of first configuration information on resource sets for an RS (PRS resource sets) and second configuration information on measurement of the RS. The second configuration information may include: information on at least one resource set where positioning-related phase measurement (e.g., CPM) is to be performed among the resource sets for the RS; and information on at least one time duration (e.g., CPM window) during which the positioning-related phase measurement is to be performed. The information on the at least one time duration included in the second configuration information may include at least one of a period of the CPM window and a time-domain pattern of the CPM window. The at least one time duration may be configured to be common to both a positioning target UE and a PRU.

The BS/TRPs may transmit a positioning-related RS to the UE/PRU (1210).

The UE/PRU may measure the positioning-related RS (1215). The measurement may be performed on a PRS resource set indicated by the second configuration information that occurs within at least one CPM window configured by the second configuration information.

When multiple CPM windows are configured, the UE/PRU may perform the positioning-related phase measurement in at least one CPM window selected from among the multiple CPM windows configured by the second configuration information. The selection of the at least one CPM window may be performed based on signaling with the network.

The UE/PRU may transmit a measurement report on the RS (1220). The measurement report may be transmitted to the LMF via the BS/TRPs.

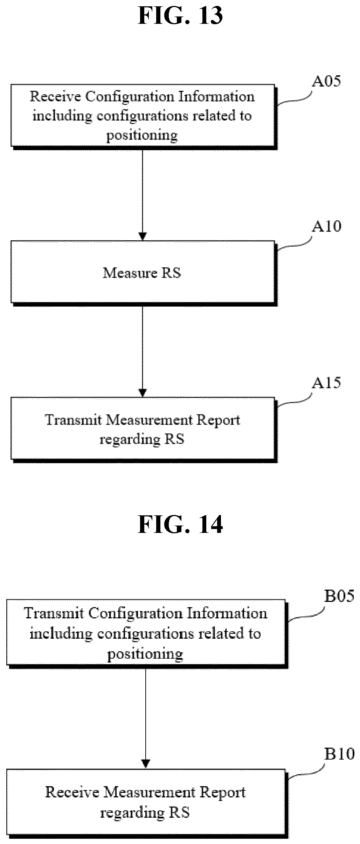

FIG. 13 is a diagram for explaining operations of a first device according to an embodiment.

Referring to FIG. 13, the first device may receive first configuration information regarding resource sets for an RS and second configuration information regarding measurement of the RS via network signaling (A05).

The first device may perform the measurement of the RS based on the first configuration information and the second configuration information (A10). The measurement of the RS may include positioning-related phase measurement. The phase measurement may include CPM for the RS.

The first device may transmit a measurement report based on the measurement of the RS (A15).

The second configuration information may include: information regarding at least one resource set where the positioning-related phase measurement is to be performed among the resource sets for the RS; and information regarding at least one time duration during which the positioning-related phase measurement is to be performed.

The information regarding the at least one time duration included in the second configuration information may include at least one of a period of the at least one time duration and a time-domain pattern of the at least one time duration.

The second configuration information regarding the measurement of the RS may be received from an LMF node based on a positioning protocol.

The positioning-related phase measurement may be performed on an RS provided in the at least one resource set during the at least one time duration.

The first device may perform the positioning-related phase measurement during a first time duration selected from among the at least one time duration configured by the second configuration information. The selection of the first time duration may be performed based on signaling with a network.

The RS may be a downlink PRS. The first device may be a positioning target UE or a PRU device.

The RS may be an SRS transmitted by a positioning target UE. The first device may be a TRP, a BS, or a PRU device.

The at least one time duration may be configured to be common to both a positioning target UE and a PRU.

FIG. 14 is a diagram for explaining operations of a second device according to an embodiment. The second device may include at least one network node (e.g., BS/TRP and/or LMF) in a wireless communication system.

Referring to FIG. 14, the second device may transmit first configuration information regarding resource sets for an RS and second configuration information regarding measurement of the RS to a first device via network signaling (B05).

The second device may receive a measurement report on the RS from the first device based on the first configuration information and the second configuration information (B10). The measurement report may include results of positioning-related phase measurement.

The second configuration information may include: information regarding at least one resource set where the positioning-related phase measurement is to be performed among the resource sets for the RS; and information regarding at least one time duration during which the positioning-related phase measurement is to be performed.

The information regarding the at least one time duration included in the second configuration information may include at least one of a period of the duration and a time-domain pattern of the at least one time duration.

The second configuration information regarding the measurement of the RS may be provided by an LMF node based on a positioning protocol.

The positioning-related phase measurement may be performed on an RS provided in the at least one resource set during the at least one time duration.

The positioning-related phase measurement may be performed during a first time duration selected from among the at least one time duration configured by the second configuration information. The second device may transmit information for selecting the first time duration to the first device via network signaling.

The RS may be a downlink PRS or an SRS.

The at least one time duration may be configured to be common to both a positioning target UE and a PRU.

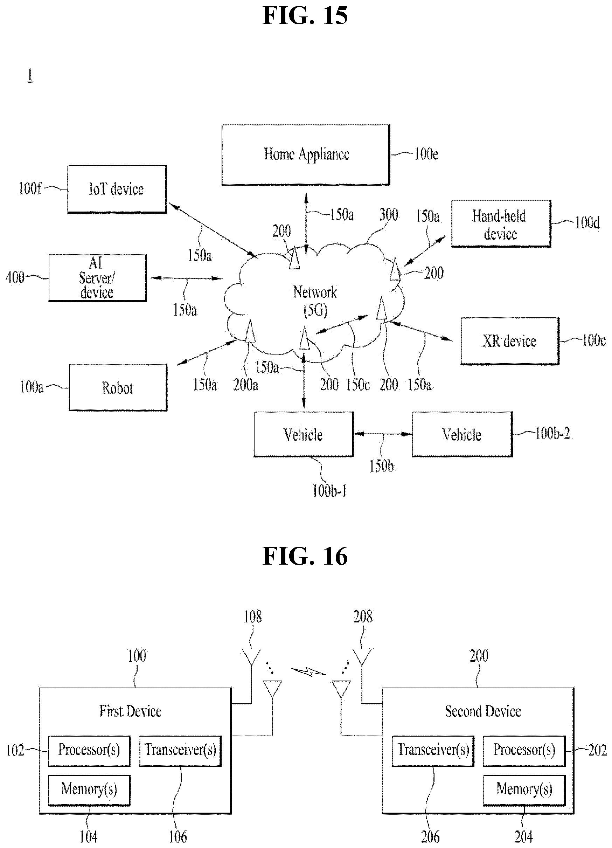

FIG. 15 illustrates a communication system 1 applied to the present disclosure.

Referring to FIG. 15, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 16 illustrates wireless devices applicable to the present disclosure.

Referring to FIG. 16, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 15.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In an embodiment of the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In an embodiment of the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

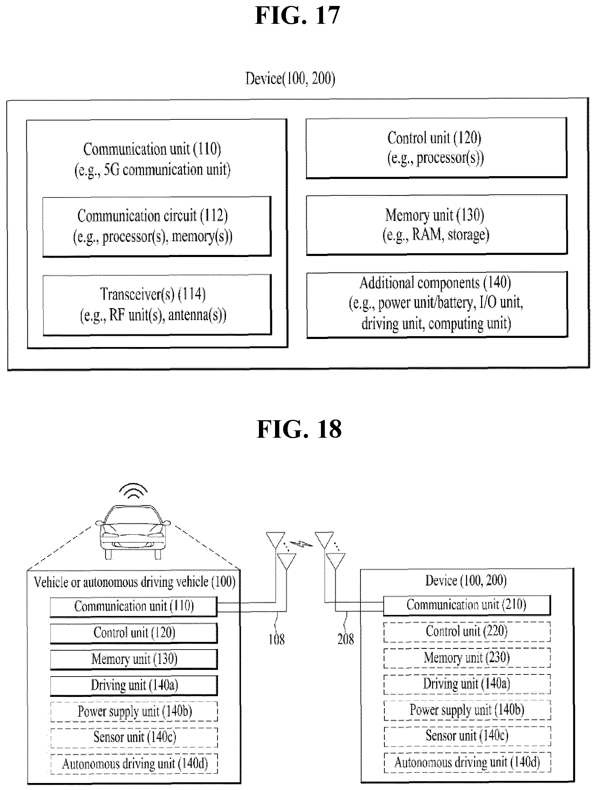

FIG. 17 illustrates another example of a wireless device applied to the present disclosure. The wireless device may be implemented in various forms according to a use-case/service (refer to FIG. 15).

Referring to FIG. 17, wireless devices 100 and 200 may correspond to the wireless devices 100 and 200 of FIG. 16 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 16. For example, the transceiver(s) 114 may include the one or more transceivers 106 and 206 and/or the one or more antennas 108 and 208 of FIG. 16. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 15), the vehicles (100b-1 and 100b-2 of FIG. 15), the XR device (100c of FIG. 15), the hand-held device (100d of FIG. 15), the home appliance (100e of FIG. 15), the IoT device (100f of FIG. 15), a digital broadcast terminal, a hologram device, a public safety device, an MTC device, a medicine device, a fintech device (or a finance device), a security device, a climate/environment device, the AI server/device (400 of FIG. 15), the BSs (200 of FIG. 15), a network node, etc. The wireless device may be used in a mobile or fixed place according to a use-example/service.

In FIG. 17, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 18 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 18, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 17, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

The above-described embodiments correspond to combinations of elements and features of the present disclosure in prescribed forms. And, the respective elements or features may be considered as selective unless they are explicitly mentioned. Each of the elements or features may be implemented in a form failing to be combined with other elements or features. Moreover, it is able to implement an embodiment of the present disclosure by combining elements and/or features together in part. A sequence of operations explained for each embodiment of the present disclosure may be modified. Some configurations or features of one embodiment may be included in another embodiment or may be substituted for corresponding configurations or features of another embodiment. And, an embodiment may be configured by combining claims failing to have relation of explicit citation in the appended claims together or may be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

**INDUSTRIAL APPLICABILITY**

The present disclosure is applicable to UEs, BSs, or other apparatuses in a wireless mobile communication system.

**Claims**

1. A method of measuring a signal by a first device in a wireless communication system, the method comprising:

   receiving, via network signaling, first configuration information regarding resource sets for a reference signal and second configuration information regarding measurement of the reference signal;
   performing the measurement of the reference signal based on the first configuration information and the second configuration information; and
   transmitting a measurement report based on the measurement of the reference signal,
   wherein the measurement of the reference signal comprises positioning-related phase measurement, and
   wherein the second configuration information comprises information regarding at least one resource set in which the positioning-related phase measurement is to be performed among the resource sets for the reference signal, and information regarding at least one time duration during which the positioning-related phase measurement is to be performed.

2. The method of claim 1, wherein the information regarding the at least one time duration included in the second configuration information comprises at least one of a period of the at least one time duration and a time-domain pattern of the at least one time duration.

3. The method of claim 1, wherein the second configuration information regarding the measurement of the reference signal is received from a location management function (LMF) node based on a positioning protocol.

4. The method of claim 1, wherein the positioning-related phase measurement is performed on a reference signal provided in the at least one resource set during the at least one time duration.

5. The method of claim 1, wherein the first device performs the positioning-related phase measurement during a first time duration selected from among the at least one time duration configured by the second configuration information.

6. The method of claim 5, wherein the selection of the first time duration is performed based on network signaling.

7. The method of claim 1, wherein the reference signal is a downlink positioning reference signal (PRS), and
   wherein the first device is a positioning target user equipment (UE) or a positioning reference unit (PRU) device.

8. The method of claim 1, wherein the reference signal is a sounding reference signal (SRS) transmitted by a positioning target user equipment (UE), and
   wherein the first device is a transmission and reception point (TRP) or a positioning reference unit (PRU) device.

9. The method of claim 1, wherein the at least one time duration is configured to be common to both a positioning target user equipment (UE) and a positioning reference unit (PRU).

10. A processor-readable recording medium having recorded thereon a program for executing the method of claim 1.

11. A first device for wireless communication, the first device comprising:

    a memory configured to store instructions; and
    a processor configured to perform operations by executing the instructions,
    wherein the operations of the processor comprise:

       receiving first configuration information regarding resource sets for a reference signal and second configuration information regarding measurement of the reference signal via network signaling;

**EP 4 598 103 A1**

performing the measurement of the reference signal based on the first configuration information and the second configuration information; and

transmitting a measurement report based on the measurement of the reference signal,

wherein the measurement of the reference signal comprises positioning-related phase measurement, and wherein the second configuration information comprises information regarding at least one resource set in which the positioning-related phase measurement is to be performed among the resource sets for the reference signal, and information regarding at least one time duration during which the positioning-related phase measurement is to be performed.

12. The first device of claim 11, further comprising a transceiver,
wherein the first device is a user equipment (UE) operating in a wireless communication system.

13. The first device of claim 11, wherein the device is a processing device configured to control a user equipment (UE) operating in a wireless communication system.

14. A method of receiving, by a second device, a measurement report from a first device in a wireless communication system, the method comprising:

transmitting first configuration information regarding resource sets for a reference signal and second configuration information regarding measurement of the reference signal to the first device via network signaling; and

receiving a measurement report on the reference signal from the first device based on the first configuration information and the second configuration information,

wherein the measurement report comprises results of positioning-related phase measurement, and wherein the second configuration information comprises information regarding at least one resource set in which the positioning-related phase measurement is to be performed among the resource sets for the reference signal, and information regarding at least one time duration during which the positioning-related phase measurement is to be performed.

15. A second device configured to receive a measurement report from a first device in a wireless communication system, the second device comprising:

a memory storing instructions; and
a processor configured to perform operations by executing the instructions,
wherein the operations of the processor comprise:

transmitting first configuration information regarding resource sets for a reference signal and second configuration information regarding measurement of the reference signal to the first device via network signaling; and

receiving a measurement report on the reference signal from the first device based on the first configuration information and the second configuration information,

wherein the measurement report comprises results of positioning-related phase measurement, and wherein the second configuration information comprises information regarding at least one resource set in which the positioning-related phase measurement is to be performed among the resource sets for the reference signal, and information regarding at least one time duration during which the positioning-related phase measurement is to be performed.

# FIG. 1

| Initial Cell Search | System Information Reception | Random Access Procedure | General DL/UL Tx/Rx S18 |

PSS/SSS & [DLRS] & PBCH — PDCCH/ PDSCH (BCCH) — PRACH — PDCCH/ PDSCH — PRACH — PDCCH/ PDSCH — PDCCH/ PDSCH — PUSCH/ PUCCH

S11    S12    S13    S14    S15    S16    S17

• DL/UL ACK/NACK
• UE CQI/PMI/Rank Report using PUSCH and PUCCH

# FIG. 2

One Frame (10ms)

Half-Frame (5ms)    Half-Frame (5ms)

Subframe 0 (1ms)    Subframe 4 (1ms)    Subframe 5 (1ms)    Subframe 9 (1ms)

Subframe (1ms)

15KHz    Slot (14 symbols)
1ms

30KHz    Slot 0 (14 symbols)    Slot 1
500us

60KHz    Slot 0 (14 symbols)    Slot 1    Slot 2    Slot 3
250us

120KHz    Slot 0 (14 symbols)    Slot 1    Slot 2    Slot 3    Slot 4    Slot 5    Slot 6    Slot 7
125us

# FIG. 3

## FIG. 4

## FIG. 5

# FIG. 6

UL grant-to-PUSCH offset (K2)

PDCCH    PUSCH

# FIG. 7

Reference
Source

GNSS signals (B)

LPP

Measurements(A,B or A+B) or Location

Target
Device

Assistance Data

Location
server

UE/SET

E-SMLC/SLP/LMF

radio signals (A)

- E-CID Location Information Transfer
- OTDOA Information Transfer
- Reporting of General Error Situations

Reference
Source

NRPPa

ACCESS NODE / BS / TS / NG-RAN

# FIG. 8

# FIG. 9

| Initiating Device | | Responding Device |
|---|---|---|
| transmit RTT measurement request | 1301 | |
| transmit RTT measurement signal at $t_0$ | | receive RTT measurement request |
| | 1303 | TOA measurement $t_1$ |
| | 1305 | transmit RTT measurement signal at $t_2$ |
| TOA measurement $t_3$ | | transmit $[t_2 - t_1]$ |
| RTT=$t_3$-$t_0$-$[t_2$-$t_1]$ | 1307 | |

(a)

$d_1$ BS$_1$

$d_2$ BS$_2$

$d_3$ BS$_3$

Target Device Location

(b)

# FIG. 10

# FIG. 11

# FIG. 12

# FIG. 13

```
┌─────────────────────────────────┐  A05
│ Receive Configuration Information │
│ including configurations related to │
│           positioning            │
└─────────────────────────────────┘
              │
              ▼
┌─────────────────────────────────┐  A10
│           Measure RS             │
└─────────────────────────────────┘
              │
              ▼
┌─────────────────────────────────┐  A15
│   Transmit Measurement Report    │
│          regarding RS            │
└─────────────────────────────────┘
```

# FIG. 14

```
┌─────────────────────────────────┐  B05
│ Transmit Configuration Information │
│ including configurations related to │
│           positioning            │
└─────────────────────────────────┘
              │
              ▼
┌─────────────────────────────────┐  B10
│    Receive Measurement Report    │
│          regarding RS            │
└─────────────────────────────────┘
```

# FIG. 15

# FIG. 16

# FIG. 17

Device(100, 200)

# FIG. 18

## INTERNATIONAL SEARCH REPORT

| International application No. |
| --- |
| **PCT/KR2023/014225** |

### A. CLASSIFICATION OF SUBJECT MATTER

**H04W 24/08**(2009.01)i; **H04W 64/00**(2009.01)i; **H04L 5/00**(2006.01)i; **H04W 24/10**(2009.01)i; **H04W 72/04**(2009.01)i; **H04W 4/029**(2018.01)i

According to International Patent Classification (IPC) or to both national classification and IPC

### B. FIELDS SEARCHED

Minimum documentation searched (classification system followed by classification symbols)

H04W 24/08(2009.01); G01S 5/14(2006.01); H04L 5/00(2006.01); H04W 4/02(2009.01); H04W 4/024(2018.01); H04W 8/24(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: PRS(positioning reference signal), CPM(Carrier Phase Measurement), 윈도우 (window), PRU(Positioning Reference Unit), 시간(time), 자원 세트(resource set)

### C. DOCUMENTS CONSIDERED TO BE RELEVANT

| Category* | Citation of document, with indication, where appropriate, of the relevant passages | Relevant to claim No. |
| --- | --- | --- |
| Y | KR 10-2021-0097784 A (DATANG MOBILE COMMUNICATIONS EQUIPMENT CO., LTD.) 09 August 2021 (2021-08-09)<br>See paragraphs [0023]-[0026], [0061], [0080], [0097], [0122], [0223]-[0235] and [0269]; claim 1; and figure 13. | 1-15 |
| Y | INTERDIGITAL, INC. Discussion on positioning based on NR carrier phase measurement. R1-2207090, 3GPP TSG RAN WG1 #110-e. Toulouse, France. 12 August 2022.<br>See section 3.3. | 1-15 |
| A | WO 2021-154373 A1 (QUALCOMM INCORPORATED) 05 August 2021 (2021-08-05)<br>See paragraphs [0131]-[0136]; and figures 6-7. | 1-15 |
| A | WO 2022-063258 A1 (HUAWEI TECHNOLOGIES CO., LTD.) 31 March 2022 (2022-03-31)<br>See claims 1-11. | 1-15 |
| A | US 2015-0219750 A1 (HUAWEI TECHNOLOGIES CO., LTD.) 06 August 2015 (2015-08-06)<br>See paragraphs [0221]-[0235]; and figure 12. | 1-15 |

☐ Further documents are listed in the continuation of Box C.   ☑ See patent family annex.

| | |
| --- | --- |
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **08 January 2024** | **08 January 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

### INTERNATIONAL SEARCH REPORT
#### Information on patent family members

International application No.

**PCT/KR2023/014225**

| Patent document cited in search report | | | Publication date (day/month/year) | Patent family member(s) | | | Publication date (day/month/year) |
|---|---|---|---|---|---|---|---|
| KR | 10-2021-0097784 | A | 09 August 2021 | CN | 111343579 | A | 26 June 2020 |
| | | | | CN | 111343579 | B | 06 August 2021 |
| | | | | EP | 3902292 | A1 | 27 October 2021 |
| | | | | JP | 2022-514430 | A | 10 February 2022 |
| | | | | TW | 202106057 | A | 01 February 2021 |
| | | | | TW | I721710 | B | 11 March 2021 |
| | | | | US | 2022-0043099 | A1 | 10 February 2022 |
| | | | | WO | 2020-125310 | A1 | 25 June 2020 |
| WO | 2021-154373 | A1 | 05 August 2021 | BR | 112022014383 | A2 | 13 September 2022 |
| | | | | CN | 114982315 | A | 30 August 2022 |
| | | | | EP | 4098038 | A1 | 07 December 2022 |
| | | | | JP | 2023-517455 | A | 26 April 2023 |
| | | | | KR | 10-2022-0133881 | A | 05 October 2022 |
| | | | | TW | 202135570 | A | 16 September 2021 |
| | | | | US | 2023-0047646 | A1 | 16 February 2023 |
| WO | 2022-063258 | A1 | 31 March 2022 | CN | 114286330 | A | 05 April 2022 |
| | | | | EP | 4213517 | A1 | 19 July 2023 |
| | | | | KR | 10-2023-0078763 | A | 02 June 2023 |
| | | | | US | 2023-0231687 | A1 | 20 July 2023 |
| US | 2015-0219750 | A1 | 06 August 2015 | CN | 104662436 | A | 27 May 2015 |
| | | | | CN | 104662436 | B | 16 March 2018 |
| | | | | US | 9829563 | B2 | 28 November 2017 |
| | | | | WO | 2014-056172 | A1 | 17 April 2014 |

Form PCT/ISA/210 (patent family annex) (July 2022)